# EUROPÄISCHE PATENTSCHRIFT

(11) **EP 1 506 899 B1**
(45) Veröffentlichungstag und Bekanntmachung des Hinweises auf die Patenterteilung: **06.12.2006**
(21) Anmeldenummer: 04017736.2
(22) Anmeldetag: 27.07.2004
(51) Int. Cl.: B60R 21/16

(54) **Fahrzeuginsassen-Rückhaltesystem**
Vehicle occupant restraint system
Système de retenue pour les occupants d'un véhicule

(30) Priorität: 14.08.2003 DE 20312596 U
(43) Veröffentlichungstag der Anmeldung: 16.02.2005
(73) Patentinhaber: TRW Automotive Safety Systems GmbH, 63743 Aschaffenburg (DE)
(72) Erfinder: Barko, Thomas, 63811 Stockstadt (DE); Fellhauer, Joachim, 63741 Nilkheim (DE)
(74) Vertreter: Kitzhofer, Thomas

(56) Entgegenhaltungen:
- EP-A- 0 957 013
- EP-A- 1 262 375
- US-B1- 6 218 738
- US-B1- 6 390 498
- ROELLEKE M ET AL: "SMART SENSORS FOR PASSENGER SAFETY SYSTEMS" AUTO TECHNOLOGY, VIEWEG PUBLISHING, WIESBADEN, DE, Bd. 1, Nr. 3, Juni 2001 (2001-06), Seiten 70-73, XP001100598 ISSN: 1616-8216

## Beschreibung

Die Erfindung betrifft ein Fahrzeuginsassen-Rückhaltesystem mit mehreren aufblasbaren Gassäcken nach dem Oberbegriff des Anspruchs 1.

Insassen-Rückhaltesysteme mit Gassäcken bieten heute sowohl bei einem Frontalaufprall als auch bei einem Seitenaufprall ein hohes Schutzpotential. Front-Gassäcke sind vor dem Insassen angeordnete Gassäcke (beispielsweise im Lenkrad oder im Armaturenbrett vor dem Beifahrer), die bei einem Frontalaufprall aktiviert werden und in die der Insasse taucht. Darüber hinaus gibt es Seitengassäcke, die sich z.B. seitlich des Thorax des Insassen oder seitlich des Kopfes des Insassen erstrecken und die bei einem Seitenaufprall aktiviert werden.

Die Erfindung schafft ein Insassen-Rückhaltesystem, das eine verbesserte Schutzwirkung bei einem Unfall entfaltet, der kein reiner Front- und kein reiner Seitenaufprall ist, sondern bei einem seitlich versetzten Frontalaufprall, der für ein Drehmoment des Fahrzeugs sorgt, und/oder bei einem Aufprall von schräg vorn.

Aus der gattungsgemäßen EP 0 957 013 A1 ist ein Fahrzeuginsassen-Rückhaltesystem mit einem Front-Gassack und einem davon getrennt aktivierbaren Kopf-Seitengassack bekannt, der sich bis seitlich des Front-Gassacks erstreckt. Der Kopf-Seitengassack beginnt unmittelbar seitlich des Fahrzeuginsassen.

Die US 6 390 498 B1 beschreibt ein Fahrzeuginsassen-Rückhaltesystem mit Front-Gassäcken sowie relativ kleinvolumigen Seitengassäcken.

Das erfindungsgemäße Insassen-Rückhaltesystem umfaßt hierzu einen Front-Gassack, einen davon getrennten Seitengassack, der vorderhalb des Insassen beginnt und sich in aufgeblasenem Zustand entlang der Tür bis seitlich des aufgeblasenen Front-Gassack erstreckt, vorzugsweise ist eine Steuerung zum Aktivieren der Gassäcke, d.h. zur Aktivierung der entsprechenden Aufblassysteme vorgesehen. Die Steuerung ist so programmiert, daß sie bei einem Frontalaufprall, einem seitlich versetzten Frontalaufprall und/oder einem Aufprall von schräg vom beide Gassäcke aktiviert.

Vorzugsweise ist die Steuerung so programmiert, daß sie bei einem seitlich versetzten Frontalaufprall und einem Aufprall von schräg vom beide Gassäcke aktiviert.

Der Seitengassack, der vom Front-Gassack getrennt ist und eine separate Einheit bildet, dient als Führungskissen für den Insassen bei einem seitlich versetzten Aufprall oder einem Aufprall von schräg vom. Der Insasse trifft auf den Seitengassack und wird von diesem an einem Kontakt mit harten Fahrzeugteilen gehindert und zum Front-Gassack gelenkt, von dem er hauptsächlich zurückgehalten wird. Die Hauptfunktion des Seitengassacks ist also eine Lenkfunktion, die Rückhaltefunktion wird hauptsächlich vom Front-Gassack ausgeübt.

Der aufgeblasene Seitengassack dient nicht dem Schutz bei einem reinen Seitenaufprall, hierzu können andere zusätzliche Seitengassäcke vorgesehen sein. Der aufgeblasene Seitengassack beginnt deshalb vorderhalb und seitlich eines zugeordneten 50 %-Insassen, um sich nach vom zum Front-Insassen zu erstrecken. Der 50 %-Insasse wird durch einen international genormten 50 %-Dummy (Hybrid III-Dummy), mit dem Rückhaltesysteme üblicherweise getestet werden, symbolisiert.

Der aufgeblasene Seitengassack hat vorzugsweise nur eine Längserstreckung von 400 bis 1000 mm, vorzugsweise 400 bis 700 mm, in Fahrzeuglängsrichtung.

Der aufgeblasene Seitengassack sollte mindestens etwa 400 mm vorderhalb der zugeordneten Rückenlehne beginnen, um sich in Fahrzeuglängsrichtung nach vom zum Front-Gassack zu erstrecken. Damit soll ausgeschlossen werden, daß der Seitengassack, der als Führungsgassack dient, mit bei einem Seitenaufprall zu aktivierenden Schutzsystemen, die unmittelbar seitlich des Insassen liegen (z.B. ein Thorax-Gassack), kollidieren kann.

Der zur Führung vorgesehene Seitengassack sollte unterhalb des Fensters in der Tür des Fahrzeugs oder in der Seitenwand (wenn seitlich des zu schützenden Insassen keine Tür vorgesehen ist) untergebracht sein.

Der aufgeblasene Seitengassack erstreckt sich von der Fensterbrüstung abwärts, vorzugsweise besitzt er eine Höhe von 300 bis 550 mm, um sein Volumen geringzuhalten.

Der vollständig aufgeblasene Seitengassack hat einen maximalen Innendruck (gemessen ohne Einfluß des Insassen), der größer, vorzugsweise um mindestens den Faktor 2 größer ist als der des vollständig aufgeblasenen Front-Gassacks. Dies dient dazu, die Hauptaufgaben der einzelnen Gassäcke zu optimieren. Der Seitengassack soll eine Führungsfunktion haben und ist deshalb extrem hart, wogegen der Front-Gassack neben der Rückhaltefunktion möglichst auch eine Abdämpfungsfunktion übernehmen soll und deshalb weicher ausgelegt ist.

Damit bei einem Aufprall von schräg vom der Insasse nicht zwischen die beiden aufgeblasenen Gassäcke gelangen kann, ist vorgesehen, daß sich Seitengassack und Front-Gassack im aufgeblasenen Zustand, quer zur Fahrzeuglängsrichtung gesehen, überschneiden und aneinandergrenzende Überdeckungsabschnitte haben. Diese Überdeckungsabschnitte liegen im vorderen, innenliegenden Randbereich des Seitengassacks, an den sich der Front-Gassack anlegen kann.

Wie bereits erwähnt kann das erfindungsgemäße Insassen-Rückhaltesystem auch mit zusätzlichen, reinen Seitengassäcken ausgestattet sein. Diese liegen in dem aufgeblasenen Zustand unmittelbar seitlich des Insassen und sind vom vorerwähnten, der Führung dienenden Seitengassack getrennt. Diese Gassäcke werden von der Steuerung bei einem reinem Seitenaufprall aktiviert.

Ein weiterer Vorteil des erfindungsgemäßen Rückhaltesystems liegt auch darin, daß bei einem Schrägaufprall nicht z.B. die großflächigen Curtain- oder Window-Bags aufgeblasen werden müssen, deren Wiedereinbau wesentlich aufwendiger ist als ein in der Türverkleidung untergebrachter der Führung dienender Gassack. Darüber hinaus ist auch das verdrängte Luftvolumen im Fahrzeuginneren geringer als bei einem System, bei welchem bereits bei einem seitlich versetzten Frontalaufprall Front-Gassäcke und gleichzeitig großvolumige, reine Seitengassäcke aufgeblasen werden. Bei Fahrzeugen, bei denen keine großflächigen, reine Seitengassäcke vorgesehen sind (z.B. Cabrios, Roadster), schafft die Erfindung eine Verbesserung des Schutzes beim versetzten Aufprall und beim Schrägaufprall.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 eine schematische Seitenansicht des erfindungsgemäßen Fahrzeuginsassen-Rückhaltesystems, und
- Figur 2 eine Draufsicht auf das erfindungsgemäße Rückhaltesystem nach Figur 1.

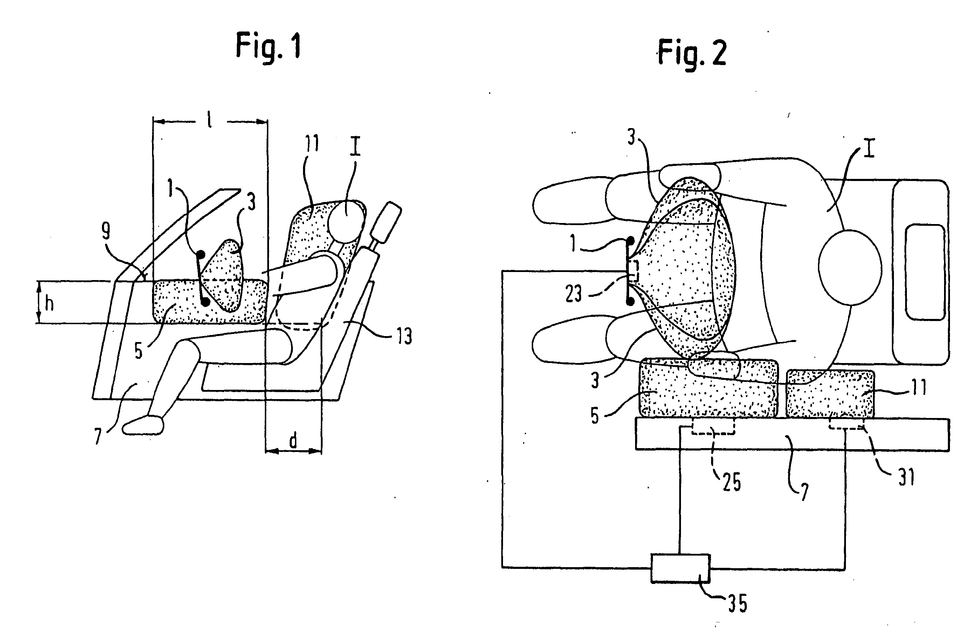

In Figur 1 ist ein Fahrzeuginsassen-Rückhaltesystem für einen Durchschnittsinsassen I dargestellt. Der Insasse I, wie dargestellt, ist ein durchschnittlich großer und schwerer Insasse, der durch einen 50 %-Dummy symbolisiert wird.

Das Rückhaltesystem weist einen im Lenkrad 1 untergebrachten Front-Gassack 3 auf, der je nach Fahrzeug, wie in Figur 2 zu sehen, unterschiedliche seitliche Ausdehnungen besitzen kann. Das Insassen-Rückhaltesystem weist darüber hinaus einen vom Front-Gassack 3 getrennten Seitengassack 5 auf, der eine längliche, kissenförmige Gestalt hat, in der Tür 7 unterhalb der Fensterbrüstung 9 und unterhalb der Türverkleidung versteckt untergebracht ist und sich im aufgeblasenen Zustand vom Bereich der Fensterbrüstung 9 über eine Höhe h von 300 bis 550 mm nach unten erstreckt. Der aufgeblasene Seitengassack 5 hat eine in Fahrzeuglängsrichtung gemessene Längserstreckung 1 von 400 bis 1000 mm, vorzugsweise zwischen 400 und 700 mm. Der Seitengassack 5 beginnt vorderhalb des Insassen I, liegt also nicht unmittelbar seitlich des Thoraxbereichs des Insassen I (auf dessen Höhe er liegt), sondern vorderhalb. Der Gassack 5 erstreckt sich bis zum Front-Gassack 3, seitlich an diesen entlang bis nahe des vorderen Türendes. In Seitenansicht gemäß Figur 2 überdecken sich die Gassäcke 3 und 5, in Figur 2 ist auch zu erkennen, daß sich bei einem großvolumigen Front-Gassack 3 dieser mit seinem seitlichen Rand am Seitengassack 5 anlegen kann.

Das erfindungsgemäße Rückhaltesystem kann sogar noch einen dritten Gassack 11 aufweisen, der ein reiner Seitengassack ist und sich unmittelbar seitlich des Oberkörpers und des Kopfes des Insassen I zur Seite erstreckt. Dieser Seitengassack 11 kann in der Fahrzeugtür 7, in der Rückenlehne 13 oder auch im Dachrahmen (nicht gezeigt) untergebracht sein. Der Seitengassack 11 liegt in Fahrzeuglängsrichtung vorzugsweise komplett hinter dem Seitengassack 5.

Der Beginn des Seitengassacks 5, vom Insassen I gesehen, kann auch dadurch definiert werden, daß er mindestens etwa 400 mm vorderhalb der zugeordneten Rückenlehne 13 liegt. Diese Länge d wird in horizontaler Richtung gemessen und ist der kleinste Abstand desjenigen Abschnitts der Rückenlehne 13, der auf Höhe des Seitengassacks 5 liegt.

Jedem Gassack 3, 5, 11 ist ein eigener Gasgenerator 23, 25, 31 zugeordnet, die alle mit einer elektronischen Steuerung 35 gekoppelt sind. Die Steuerung 35 wiederum ist mit mehreren nicht gezeigten Sensoren gekoppelt, die die Aufprallintensität und die Richtung der Einleitung der Kraft in das Fahrzeug bestimmen können. Gemäß einer Ausführungsform werden beide Gassäcke 3 und 5 auf jeden Fall aktiviert, wenn ein Frontalaufprall ohne Versatz, ein seitlich versetzter Frontalaufprall oder ein Aufprall von schräg vorn erfolgt. Gemäß einer anderen Option mit einer anderen Sensorik sieht die Steuerung 35 vor, daß bei einem Frontalaufprall mit vollständiger Überdeckung (d.h. kein Versatz) nur der Front-Gassack 3 aktiviert und aufgeblasen wird. Sollte möglicherweise noch ermittelt werden, daß die Lage des Insassen nicht korrekt ist, wird auch bei einem derartigen Aufprall der Seitengassack 5 mit aktiviert. Bei einem seitlich versetzten Frontalaufprall oder einem Aufprall von schräg vom werden beide Gassäcke 3, 5 aufgeblasen.

Im vollständig aufgeblasenen Zustand beider Gassäcke 3, 5 besitzt der Seitengassack 5 einen um mindestens den Faktor 2 größeren Innendruck als der Front-Gassack 3.

Bei einem Aufprall von schräg vom wird durch den Seitengassack 5 verhindert, daß der Insasse I am Rand des Gassacks 3 zurückgehalten wird, der Seitengassack 5 führt ihn quasi bei der Verlagerung nach vorn mittig zum Front-Gassack 3, wo er zurückgehalten wird. Der Seitengassack 5 verhindert darüber hinaus den Kontakt mit Innenraumteilen.

Der Front-Gassack 1 kann natürlich auch als Front-Gassack für einen Beifahrer oder Heckinsassen ausgeführt sein.

## Patentansprüche

1. Fahrzeuginsassen-Rückhaltesystem, mit einem Front-Gassack (3) und einem davon getrennten Seitengassack (5), der sich entlang der Tür (7) bis zumindest seitlich des Front-Gassacks (3) erstreckt, **dadurch gekennzeichnet, daß** der Seitengassack (5) vorderhalb des Insassen beginnt, um sich nach vom zum Front-Gassack (3) zu erstrecken.

2. Fahrzeuginsassen-Rückhaltesystem nach Anspruch 1, **gekennzeichnet durch** eine Steuerung (35) zum Aktivieren der Gassäcke (3, 5), wobei die Steuerung (35) so programmiert ist, daß sie bei einem Frontalaufprall und/oder einem seitlich versetzten Frontalaufprall und/oder einem Aufprall von schräg vorn beide Gassäcke (3, 5) aktiviert.

3. Fahrzeuginsassen-Rückhaltesystem nach Anspruch 1 oder 2, **dadurch gekennzeichnet, daß** der aufgeblasene Seitengassack (5) vorderhalb und seitlich eines zugeordneten 50 %-Insassen beginnt und sich nach vom erstreckt.

4. Fahrzeuginsassen-Rückhaltesystem nach einem der vorhergehenden Ansprüche, **dadurch gekennzeichnet, daß** der aufgeblasene Seitengassack (5) eine Längserstreckung in Fahrzeuglängsrichtung von 400 bis 1000 mm hat.

5. Fahrzeuginsassen-Rückhaltesystem nach einem der vorhergehenden Ansprüche, **dadurch gekennzeichnet, daß** der aufgeblasene Seitengassack (5) mindestens etwa 400 mm vorderhalb der zugeordneten Rückenlehne (13) beginnt, um sich in Fahrzeuglängsrichtung nach vorn zu erstrecken.

6. Fahrzeuginsassen-Rückhaltesystem nach einem der vorhergehenden Ansprüche, **dadurch gekennzeichnet, daß** der Seitengassack (5) unterhalb des Fensters in der Seitenwand oder der Tür (7) des Fahrzeugs untergebracht ist.

7. Fahrzeuginsassen-Rückhaltesystem nach einem der vorhergehenden Ansprüche, **dadurch gekennzeichnet, daß** sich der aufgeblasene Seitengassack (5) von der Fensterbrüstung (9) abwärts erstreckt.

8. Fahrzeuginsassen-Rückhaltesystem nach einem der vorhergehenden Ansprüche, **dadurch gekennzeichnet, daß** der aufgeblasene Seitengassack (5) eine Höhe (h) von 300 bis 550 mm hat.

9. Fahrzeuginsassen-Rückhaltesystem nach einem der vorhergehenden Ansprüche, **dadurch gekennzeichnet, daß** der Seitengassack (5) in vollständig aufgeblasenem Zustand einen maximalen Innendruck hat, der größer ist als der des vollständig aufgeblasenen Front-Gassacks (3).

10. Fahrzeuginsassen-Rückhaltesystem nach Anspruch 9, **dadurch gekennzeichnet, daß** der Innendruck des Seitengassacks (5) in vollständig aufgeblasenem Zustand mindestens um den Faktor 2 größer ist als der des Front-Gassacks (3).

11. Fahrzeuginsassen-Rückhaltesystem nach einem der vorhergehenden Ansprüche, **dadurch gekennzeichnet, daß** sich der aufgeblasene Seitengassack (5) und der aufgeblasene Front-Gassack (3), quer zur Fahrzeuglängsrichtung gesehen, überschneiden und aneinandergrenzende Überdeckungsabschnitte haben.

12. Fahrzeuginsassen-Rückhaltesystem nach einem der vorhergehenden Ansprüche, **dadurch gekennzeichnet, daß** ein zusätzlicher, zweiter Seitengassack (11) vorgesehen ist, der in aufgeblasenem Zustand unmittelbar seitlich des Insassen (I) angeordnet und vom ersten Seitengassack (5) getrennt ist.

13. Fahrzeuginsassen-Rückhaltesystem nach Anspruch 12, **dadurch gekennzeichnet, daß** die Steuerung (35) so ausgebildet ist, daß sie den zusätzlichen, zweiten Seitengassack (11) bei einem Seitenaufprall aktiviert.

## Claims

1. A vehicle occupant restraint system comprising a front gas bag (3) and a side gas bag (5) separate therefrom, which extends along the door (7) up to at least beside the front gas bag (3), **characterized in that** the side gas bag (5) begins at the front of the occupant to extend forward to the front gas bag (3).

2. The vehicle occupant restraint system according to Claim 1, **characterized by** a control arrangement (35) for activating the gas bags (3, 5), the control arrangement (35) being programmed such that in case of a frontal impact and/or a laterally offset frontal impact and/or an impact obliquely from the front, it activates both gas bags (3, 5).

3. The vehicle occupant restraint system according to Claim 1 or 2, **characterized in that** the inflated side gas bag (5) begins at the front and to the side of an associated 50 % occupant and extends forward.

4. The vehicle occupant restraint system according to any of the preceding claims, **characterized in that** the inflated side gas bag (5) has a longitudinal extent of 400 to 1000 mm in the longitudinal direction of the vehicle.

5. The vehicle occupant restraint system according to any of the preceding claims, **characterized in that** the inflated side gas bag (5) begins at least approximately 400 mm in front of the associated backrest (13) to extend forward in the longitudinal direction of the vehicle.

6. The vehicle occupant restraint system according to any of the preceding claims, **characterized in that** the side gas bag (5) is housed underneath the window in the side wall or the door (7) of the vehicle.

7. The vehicle occupant restraint system according to any of the preceding claims, **characterized in that** the inflated side gas bag (5) extends downwards from the window sill (9).

8. The vehicle occupant restraint system according to any of the preceding claims, **characterized in that** the inflated side gas bag (5) has a height (h) of 300 to 550 mm.

9. The vehicle occupant restraint system according to any of the preceding claims, **characterized in that** the side gas bag (5) in the fully inflated state has a maximum internal pressure which is greater than that of the fully inflated front gas bag (3).

10. The vehicle occupant restraint system according to Claim 9, **characterized in that** the internal pressure of the side gas bag (5) in the fully inflated state is greater than that of the front gas bag (3) at least by the factor 2.

11. The vehicle occupant restraint system according to any of the preceding claims, **characterized in that** the inflated side gas bag (5) and the inflated front gas bag (3), viewed transversely to the longitudinal direction of the vehicle, overlap each other and have coinciding sections adjoining each other.

12. The vehicle occupant restraint system according to any of the preceding claims, **characterized in that** an additional, second side gas bag (11) is provided, which in the inflated state is arranged immediately to the side of the occupant (I) and is separate from the first side gas bag (5).

13. The vehicle occupant restraint system according to Claim 12, **characterized in that** the control arrangement (35) is configured such that it activates the additional, second side gas bag (11) in case of a side impact.

## Revendications

1. Système de retenue de passager de véhicule, comportant un coussin à gaz frontal (3) et un coussin à gaz latéral (5) séparé de celui-ci, qui s'étend le long de la porte (7) jusqu'au moins latéralement au coussin à gaz frontal (3), **caractérisé en ce que** le coussin à gaz latéral (5) commence en avant du passager pour s'étendre vers le devant vers le coussin à gaz frontal (3).

2. Système de retenue de passager de véhicule selon la revendication 1, **caractérisé par** une commande (35) pour activer les coussins à gaz (3, 5), la commande (35) étant programmée de telle sorte qu'elle active les deux coussins à gaz (3, 5) lors d'un impact frontal et/ou lors d'un impact frontal décalé latéralement et/ou lors d'impact de devant en biais.

3. Système de retenue de passager de véhicule selon la revendication 1 ou 2, **caractérisé en ce que** le coussin à gaz latéral (5) gonflé commence en avant et sur le côté d'un occupant au 50^{e} percentile associé et s'étend vers l'avant.

4. Système de retenue de passager de véhicule selon l'une des revendications précédentes, **caractérisé en ce que** le coussin à gaz latéral (5) gonflé a une extension longitudinale de 400 à 1000 mm en direction longitudinale du véhicule.

5. Système de retenue de passager de véhicule selon l'une des revendications précédentes, **caractérisé en ce que** le coussin à gaz latéral (5) gonflé commence à au moins approximativement 400 mm au-devant du dossier (13) associé pour s'étendre vers l'avant en direction longitudinale du véhicule.

6. Système de retenue de passager de véhicule selon l'une des revendications précédentes, **caractérisé en ce que** le coussin à gaz latéral (5) est logé au-dessous de la fenêtre dans la paroi latérale ou dans la porte (7) du véhicule.

7. Système de retenue de passager de véhicule selon l'une des revendications précédentes, **caractérisé en ce que** le coussin à gaz latéral (5) gonflé s'étend depuis l'allège de fenêtre (9) vers le bas.

8. Système de retenue de passager de véhicule selon l'une des revendications précédentes, **caractérisé en ce que** le coussin à gaz latéral (5) gonflé a une hauteur (h) de 300 à 550 mm.

9. Système de retenue de passager de véhicule selon l'une des revendications précédentes, **caractérisé en ce que** le coussin à gaz latéral (5) a, à l'état totalement gonflé, une pression intérieure maximale qui est supérieure à celle du coussin à gaz frontal (3) totalement gonflé.

10. Système de retenue de passager de véhicule selon la revendication 9, **caractérisé en ce que** la pression intérieure du coussin à gaz latéral (5) à l'état totalement gonflé est supérieure d'au moins le facteur 2 de celle du coussin à gaz frontal (3).

11. Système de retenue de passager de véhicule selon l'une des revendications précédentes, **caractérisé en ce que** le coussin à gaz latéral (5) gonflé et le coussin à gaz frontal (3) gonflé, vus transversalement à la direction longitudinale du véhicule, se chevauchent et ont des tronçons de recouvrement adjacents les uns aux autres.

12. Système de retenue de passager de véhicule selon l'une des revendications précédentes, **caractérisé en ce qu'**il est prévu un deuxième coussin à gaz latéral (11) additionnel qui, à l'état gonflé, est directement agencé à côté du passager (I) et est séparé du premier coussin à gaz latéral (5).

13. Système de retenue de passager de véhicule selon la revendication 12, **caractérisé en ce que** la commande (35) est réalisée telle qu'elle active le deuxième coussin à gaz latéral (11) additionnel lors d'un impact latéral.
